# EUROPEAN PATENT APPLICATION

(11) **EP 2 471 591 A1**
(43) Date of publication of application: **04.07.2012**
(21) Application number: 10811844.9
(22) Date of filing: 24.08.2010
(51) Int. Cl.: B01D 65/10

(54) **MEMBRANE FILTRATION DEVICE**

(30) Priority: 27.08.2009 JP 2009197156
(71) Applicant: Nitto Denko Corporation, Ibaraki-shi, Osaka 567-8680 (JP)
(72) Inventor: KONISHI,Takahisa, Ibaraki-shi Osaka 567-8680 (JP); IKEYAMA,Norio, Ibaraki-shi Osaka 567-8680 (JP); NAGASHIMA,Toshio, Yokohama-shi Kanagawa 244-0817 (JP)
(74) Representative: Sajda, Wolf E.
(86) International application number: PCT/JP2010/064259
(87) International publication number: WO 2011/024794

(57) **Abstract**

The present invention provides a membrane filtration device capable of performing radio communication well by disposing the radio antenna in a more suitable manner. The membrane filtration device includes an internal member (100) disposed at a position different from that between the filtration membrane within the pressure vessel (40) and an inner wall of the pressure vessel (40), at least a part of an outer wall of which is close to the inner wall of the pressure vessel (40), and a radio antenna (103A) disposed in the internal member (100). Since at least a part of the outer wall of the internal member (100) is close to the inner wall of the pressure vessel (40), the thickness of the raw liquid present between the outer wall and the inner wall of the pressure vessel (40) is small, so that the damping of the radio wave due to the raw liquid can be restrained, thereby making it possible to perform the radio communication well. Furthermore, restrictions on the position at which the radio antenna (103A) is disposed can be alleviated, and the radio antenna (103A) can be disposed in a more suitable manner as compared with a case in which the radio antenna (103A) is provided between the filtration membrane within the pressure vessel (40) and the inner wall of the pressure vessel (40).

## Description

### TECHNICAL FIELD

The present invention relates to a membrane filtration device that produces permeated liquid by filtering raw liquid with a filtration membrane.

### BACKGROUND ART

A membrane filtration device is known that is constructed by arranging and disposing a plurality of membrane elements along a straight line within a pressure vessel (for example, see the following Patent Document 1). A membrane filtration device of this kind is generally used for obtaining purified permeated water (permeated liquid) by filtering raw water (raw liquid) such as waste water or sea water.
In particular, in a large-scale plant or the like, numerous membrane filtration devices are held and supported by a rack referred to as a train, whereby management of processing characteristics (pressure, quality and amount of permeated water, and the like) is carried out train by train.

However, in the case of carrying out the management of the processing characteristics train by train as described above, the following problem is raised. That is, when there is a defect only in a membrane element or a connection part in a part of the membrane filtration devices among the numerous membrane filtration devices held and supported by a train, it is difficult to identify the defective site, thereby imposing a great labor on the identification work.

Also, in a construction in which numerous membrane filtration devices each of which is provided with a plurality of membrane elements are held and supported by a train as described above, the degree of contamination of the filtration membrane and the load at the time when the raw water is filtered by the filtration membrane will differ in accordance with the position of each membrane filtration device within the train or the position of each membrane element within each membrane filtration device.
For this reason, in exchanging membrane elements, new membrane elements and still usable membrane elements are suitably combined and housed within the pressure vessel, thereby to optimize the arrangement and combination of the membrane elements so that eventually the optimal processing performance can be exhibited in the train as a whole.
However, in a current situation, the optimization is often carried out only on the basis of the period of use, so that it is not possible to say that the optimization is sufficiently carried out.

### PRIOR ART DOCUMENT

### PATENT DOCUMENT

- Patent Document 1:: Japanese Published Patent Application Publication JP-A-2007-527 318.

### DISCLOSURE OF THE INVENTION

### PROBLEMS TO BE SOLVED BY THE INVENTION

From such a background, it can be considered to observe the property of liquid within the membrane filtration device from the outside, for example, by sensing the property of the liquid within the membrane filtration device with a sensor and transmitting a signal from the sensor from within the pressure vessel to the outside.
In such a case, when it is attempted to transmit the signal from the sensor to the outside in a wired manner, a special structure or devising will be needed particularly in the pressure vessel that is filled with raw water at a high pressure such as 10 MPa at the maximum, so that a construction of transmitting in a wireless manner is preferable.

However, raw water such as sea water having a high salt concentration has a high electric conductivity. When a radio antenna is provided in an environment in which raw water having such a high electric conductivity intervenes, the radio wave is damped by the raw water, thereby raising a problem in that the radio communication cannot be carried out well. Further, water-proof property to the radio antenna must also be considered.

Thus, the inventors of the present application have considered holding a radio antenna by an internal member provided in the pressure vessel and restraining the influence of the raw water by devising the position at which this internal member is disposed.
Then, as a result of further studies, the inventors have found out that, when the thickness of the raw water that is present between the outer wall of the internal member and the inner wall of the pressure vessel is small, the radio communication can be carried out well even if there is a distance of a certain degree between the radio antenna provided in the internal member and the inner wall of the pressure vessel.

By utilizing such a result, restrictions on the position at which the radio antenna is disposed can be restrained. However, with a construction in which a radio tag (RFID tag) is disposed between the filtration membrane and the inner wall of the pressure vessel, for example, as in the above-mentioned Patent Document 1, the position at which the radio tag is disposed is inherently restricted and, when it is attempted to form the filtration membrane in a scale as large as possible for improvement of the water-processing efficiency, there is a problem in that the position at which the radio tag is disposed is further restricted. Therefore, it is necessary to devise also the position at which the internal member that holds the radio antenna is disposed.

The present invention has been made in view of the above circumstances, and an object thereof is to provide a membrane filtration device capable of performing radio communication well by disposing the radio antenna in a more suitable manner.

### MEANS FOR SOLVING TI-IE PROBLEMS

As a membrane filtration device according to the present invention, a construction can be considered which is a membrane filtration device that produces permeated liquid by filtering raw liquid with a filtration membrane, including a pressure vessel that houses the filtration membrane and whose inside is filled with the raw liquid, an internal member disposed at a position different from that between the filtration membrane within the pressure vessel and an inner wall of the pressure vessel, at least a part of an outer wall of which is close to the inner wall of the pressure vessel, and a radio antenna disposed in the internal member.

With such a construction, the internal member, at least a part of the outer wall of which is close to the inner wall of the pressure vessel, is provided at the position different from that between the filtration membrane within the pressure vessel and the inner wall of the pressure vessel, and the radio antenna is disposed in the internal member.
Since at least a part of the outer wall of the internal member is close to the inner wall of the pressure vessel, the thickness of the raw liquid present between the outer wall and the inner wall of the pressure vessel is small, so that the damping of the radio wave due to the raw liquid can be restrained, thereby making it possible to perform the radio communication well.

Furthermore, restrictions on the position at which the radio antenna is disposed can be alleviated, and the radio antenna can be disposed in a more suitable manner as compared with a case in which the radio antenna is provided between the filtration membrane within the pressure vessel and the inner wall of the pressure vessel.

In the present invention, it is preferable that a distance between the inner wall of the pressure vessel and the part of the outer wall of the internal member close to the inner wall of the pressure vessel is within 10 cm.

With such a construction, the thickness of the raw liquid that is present between the outer wall of the internal member and the inner wall of the pressure vessel will be within 10 cm, so that the damping of the radio wave due to the raw liquid can be restrained efficiently, whereby the radio communication can be performed better.
This numerical value of "10 cm" is a numerical value that has been deduced from an experiment based on a general range of the electric conductivity of the raw liquid and a general range of the frequency band used in radio communication.

In the present invention, it is preferable that the part of the outer wall of the internal member that is close to the inner wall of the pressure vessel is spaced apart from the inner wall of the pressure vessel.

With such a construction, the outer wall of the internal member and the inner wall of the pressure vessel do not come into contact with each other. Therefore, in inserting and fitting a member such as the internal member into the pressure vessel, the internal member can be prevented from being broken by frictions with the inner wall of the pressure vessel, and the labor at the time of inserting and fitting can be prevented from increasing.

In the present invention, it is preferable that the radio antenna is enclosed and buried within the internal member.

With such a construction, by enclosing and burying the radio antenna within the internal member, the water-proof property can be improved, and the radio antenna can be prevented from being rusted. Also, the pressure resistance can be improved, so that the radio communication can be performed well even in a high-pressure environment.

In the present invention, the membrane filtration device may be provided with a sensor that senses a property of liquid within the pressure vessel, and a signal from the sensor may be transmitted via the radio antenna.

With such a construction, the property of the liquid within the pressure vessel can be observed from the outside by transmitting the signal from the sensor via the radio antenna and receiving the signal at the outside of the pressure vessel, so that maintenance can be carried out well on the basis of the observation result.

In the present invention, the sensor may be disposed in the internal member.

With such a construction, the radio antenna and the sensor are provided integrally with the internal member, so that the electrical connection between the radio antenna and the sensor can be certainly established by means of a shorter interconnect. Also, since the radio antenna and the sensor can be integrally handled with, the work of assembling the membrane filtration device or the like is facilitated.

In the present invention, the internal member may be disposed at an end of a membrane element having the filtration membrane.

With such a construction, by providing the radio antenna in the internal member disposed at an end of the membrane element, the radio antenna can be disposed more easily as compared with a construction in which the radio antenna is disposed on the filtration membrane side.

In the present invention, the internal member may be disposed as a body separate from a membrane element having the filtration membrane.

With such a construction, by providing the radio antenna in the internal member disposed as a body separate from the membrane element, the radio antenna can be disposed more easily as compared with a construction in which the radio antenna is disposed in the membrane element.

### BRIEF DESCRIPTION OF THE DRAWINGS

- Fig. 1: is a schematic cross-sectional view showing one example of a membrane filtration device according to one embodiment of the present invention.
- Fig. 2: is a schematic cross-sectional view showing a construction example of a membrane filtration device.
- Fig, 3: is a perspective view showing a part of an internal construction of a membrane element of Fig. 2.
- Fig. 4: is a view showing one construction example of an internal member, where
- Fig. 4(a): shows a cross-sectional view, and
- Fig. 4(b): shows a front view.
- Fig. 5: is a schematic cross-sectional view showing one example of a membrane filtration device using the internal member of Fig. 4.
- Fig. 6: is a view showing another construction example of an internal member, where
- Fig. 6(a): shows a cross-sectional view, and
- Fig. 6(b): shows a front view.
- Fig. 7: is a schematic cross-sectional view showing one example of a membrane filtration device using the internal member of Fig. 6.
- Fig. 8: is a schematic cross-sectional view showing another example of a membrane filtration device.

### MODES FOR CARRYING OUT THE INVENTION

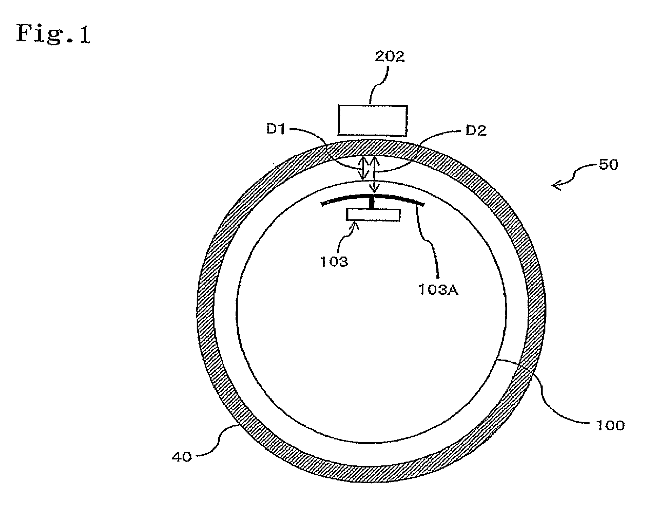

Fig. 1 is a schematic cross-sectional view showing one example of a membrane filtration device 50 according to one embodiment of the present invention. This membrane filtration device 50 is a device that produces permeated water (permeated liquid) by filtering raw water (raw liquid) with a filtration membrane, and the present invention can be applied to the membrane filtration device 50 equipped with various kinds of water-processing membrane modules such as a spiral RO membrane element, a hollow thread membrane module, and an immersion-type flat membrane module.

The membrane filtration device 50 is provided with a pressure vessel 40, an internal member 100 disposed within the pressure vessel 40, and an internal communication device 103 held and supported by the internal member 100. The pressure vessel 40 is a container made of resin whose inside is filled with raw water such as waste water or sea water, for example.
In this example, the pressure vessel 40 is formed to have a tubular shape having an outer diameter of 11 cm (for 4 inches, low-pressure vessel) to 45 cm (for 16 inches, high-pressure vessel) and a thickness of the wall surface of 0.5 cm to 2.5 cm. However, the pressure vessel 40 is not limited to a tubular one.

The internal communication device 103 is provided with a radio antenna 103A and is adapted to be able to perform radio communication between the internal communication device 103 and an external communication device 202 disposed on the outside of the pressure vessel 40 via the radio antenna 103A. The frequency band of radio communication by the internal communication device 103 is, for example, a UHF band such as 2.4 GHz or 430 MHz, or 13.56 MHz.

In addition to the above radio antenna 103A, the internal communication device 103 is provided, for example, with a quartz oscillator, a resistor, a capacitor, an inductor, an operation element (CPU, MPU, or the like), a microcomputer for control, a rectification element, an antenna, a memory, an operation amplifier, a signal conversion element (analog digital converter, digital analog converter, or the like), an imaging element (CCD, CMOS, or the like), and is constructed by connecting these electrical components by wire on a circuit substrate. The radio antenna 103A may be mounted on the circuit substrate or may be disposed separately from the circuit substrate and connected to the circuit substrate by wire.

The internal member 100 is made, for example, of resin, and at least a part of the outer wall thereof is close to the inner wall of the pressure vessel 40. In this example, the internal member 100 is formed to have a circular shape having a smaller diameter than the inner circumference of the pressure vessel 40, and the whole of the outer circumferential surface thereof is close to the inner wall of the pressure vessel 40.
However, the internal member 100 is not limited to such a shape, so that various shapes such as a shape in which a recess is formed in a part of the outer circumferential surface, for example, can be adopted as long as at least a part of the outer wall is close to the inner wall of the pressure vessel 40.

In this embodiment, various electrical components such as the internal communication device 103 including the radio antenna 103A is enclosed and buried within the internal member 100 made of resin. Here, the term "enclosing and burying" means covering an object closely and tightly. Since the water-proof property is high and there is no space between the object and the covering, a pressure resistance to the outside pressure is higher as compared with a case in which there is a space between the object and the covering.
In this manner, by enclosing and burying the radio antenna 103A within the internal member 100, the water-proof property can be improved, and the radio antenna 103A can be prevented from being rusted. Also, the pressure resistance can be improved, so that the radio communication can be performed well even in a high-pressure environment.

The method for molding the internal member 100 made of resin may be, for example, injection molding, extrusion molding, insertion molding, cast molding, vacuum cast molding, or the like; however, the method is not limited to these molding methods.
Examples of a resin 8 used in insertion molding or the like include polystyrene (PS), acrylonitrile-butadiene-styrene copolymer synthetic resin (ABS), polymethylmethacrylate (PMMA), polycarbonate (PC), vinyl chloride resin (PVC), nylon 6 (PA), polyacetal (POM), polyethylene terephthalate (PET), polybutylene terephthalate (PBT), polyphenylene oxide (PPO), polysulfone (PSU), polyphenylene sulfide (PPS), polyallylsulfone (PAS), polyarylate (PAR), polyphenylene ether (PPE), polyethersulfone (PES), polyether ether ketone (PEEK), and polyimide (PI).
Examples of the resin 8 used in cast molding include epoxy resin and urethane resin. Also, the strength may be improved by adding an additive such as a glass fiber, a carbon fiber, or a filler to the resin 8 such as described above.

The resin that forms the internal member 100 is preferably a resin having a high rigidity in view of the pressure resistance, and Young's modulus thereof is preferably 0.3 GPa or higher, more preferably 2 GPa or higher, still more preferably 3 GPa. The resin that forms the internal member 100 is not limited to one layer and may have a construction in which two or more layers are laminated.

Raw water is present between the outer wall of the internal member 100 and the inner wall of the pressure vessel 40. Raw water such as sea water having a high salt concentration has a high electric conductivity. When radio communication is carried out via the radio antenna 103A in an environment in which such raw water having a high electric conductivity intervenes, the radio wave will be damped by the raw water.
Therefore, the thickness of the raw water that is present between the outer wall of the internal member 100 and the inner wall of the pressure vessel 40, that is, the distance D 1 between the inner wall of the pressure vessel 40 and the part of the outer wall of the internal member 100 that is close to the inner wall of the pressure vessel 40, is preferably as small as possible.
According to a result of experiments performed by the inventors of the present application, it has been found out that the above distance D1 is preferably within 10 cm. Hereafter, the experiment result will be described with reference to Table 1.

**TABLE 1**

| | Frequency | Medium | Electric conductivity (µs/cm) | Salt concentration (%) | Thickness of water (cm) | Judgement |
|---|---|---|---|---|---|---|
| Example 1 | 2.4 GHz | Saline solution | 50500 | 3.15 | 10 | Δ |
| Example 2 | 2.4 GHz | Saline solution | 18990 | 1.07 | 9 | ○ |
| Examples 3 | 430 MHz | Saline solution | 50500 | 3.15 | 10 | ○ |
| Examples 4 | 13.56 MHz | Saline Solution | 45600 | 2.81 | 10 | ○ |
| Comparative Example 1 | 2.4 GHz | Saline solution | 45600 | 2.81 | 12 | × |
| Comparative Example 2 | 2.4 GHz | Permeated water | 10 | 0 | 14 | × |
| Comparative Example 3 | 430 MHz | Saline solution | 50500 | 3.15 | 15 | × |
| Comparative Example 4 | 13.56 MHz | Saline Solution | 45600 | 2.81 | 20 | × |

### Example 1

The inside of a pressure vessel 40 was filled with a saline solution having a salt concentration of 3.15 %, and radio communication was carried out in a frequency band of 2.4 GHz via a radio antenna 103A by setting the thickness of the saline solution (distance D1) that was present between the outer wall of the internal member 100 and the inner wall of the pressure vessel 40 to be 10 cm, and the intensity of receiving was measured. The electric conductivity of the saline solution such as described above was 50500 µS/cm.
As a result of this experiment, it has been confirmed that the intensity of receiving was of a degree such that the radio communication can be carried out though the intensity was of a low degree of 80 to 90 dB or less which is a permissible range of radio wave damping in an ordinary radio system.
Here, regarding the above permissible range of radio wave damping, the received electric power in a radio device capable of data transmission having a communication certainty with few errors is, for example, about -90 dBm (1 mW = 0 dBm) in a radio transmission system according to IEEE 802.15.4 of 2.4 GHz band capable of operating with a small electric power consumption within the container.
When the radio device transmission electric power within the container is 0 mW, the permissible range of radio wave damping is about 80 to 90 dB or less as a reference.

### Examples2

The inside of a pressure vessel 40 was filled with a saline solution having a salt concentration of 1.07 %, and radio communication was carried out in a frequency band of 2.4 GHz via a radio antenna 103A by setting the thickness of the saline solution (distance D1) that was present between the outer wall of the internal member 100 and the inner wall of the pressure vessel 40 to be 9 cm, and the intensity of receiving was measured.
The electric conductivity of the saline solution such as described above was 18990 µS/cm. As a result of this experiment, it has been confirmed that the damping of the radio wave is small and a sufficient intensity of receiving can be obtained, so that the radio communication can be carried out.

### Example 3

The inside of a pressure vessel 40 was filled with a saline solution having a salt concentration of 3.15 %, and radio communication was carried out in a frequency band of 430 MHz via a radio antenna 103A by setting the thickness of the saline solution (distance D1) that was present between the outer wall of the internal member 100 and the inner wall of the pressure vessel 40 to be 10 cm, and the intensity of receiving was measured.
The electric conductivity of the saline solution such as described above was 50500 µS/cm. As a result of this experiment, it has been confirmed that the damping of the radio wave is small and a sufficient intensity of receiving can be obtained, so that the radio communication can be carried out.

### Example 4

The inside of a pressure vessel 40 was filled with a saline solution having a salt concentration of 2.81 %, and radio communication was carried out in a frequency band of 13.56 MHz via a radio antenna 103A by setting the thickness of the saline solution (distance D1) that was present between the outer wall of the internal member 100 and the inner wall of the pressure vessel 40 to be 10 cm, and the intensity of receiving was measured.
The electric conductivity of the saline solution such as described above was 45600 µS/cm. As a result of this experiment, it has been confirmed that the damping of the radio wave is small and a sufficient intensity of receiving can be obtained, so that the radio communication can be carried out.

### Comparative Example 1

The inside of a pressure vessel 40 was filled with a saline solution having a salt concentration of 2.81 %, and radio communication was carried out in a frequency band of 2.4 GHz via a radio antenna 103A by setting the thickness of the saline solution (distance D1) that was present between the outer wall of the internal member 100 and the inner wall of the pressure vessel 40 to be 12 cm, and the intensity of receiving was measured.
The electric conductivity of the saline solution such as described above was 45600 µS/cm. As a result of this experiment, it has been confirmed that the damping of the radio wave greatly exceeds the permissible range of an ordinary radio system and the signal cannot be received, so that the radio communication cannot be carried out.

### Comparative Example 2

The inside of a pressure vessel 40 was filled with permeated water having a salt concentration of 0%, and radio communication was carried out in a frequency band of 2.4 GHz via a radio antenna 103A by setting the thickness of the permeated water (distance D1) that was present between the outer wall of the internal member 100 and the inner wall of the pressure vessel 40 to be 14 cm, and the intensity of receiving was measured.
The electric conductivity of the permeated water such as described above was 10 µS/cm. As a result of this experiment, it has been confirmed that the damping of the radio wave greatly exceeds the permissible range of an ordinary radio system and the signal cannot be received continuously, thereby providing a condition unsuitable for carrying out the radio communication.

### Comparative Example 3

The inside of a pressure vessel 40 was filled with a saline solution having a salt concentration of 3.15 %, and radio communication was carried out in a frequency band of 430 MHz via a radio antenna 103A by setting the thickness of the saline solution (distance D1) that was present between the outer wall of the internal member 100 and the inner wall of the pressure vessel 40 to be 15 cm, and the intensity of receiving was measured.
The electric conductivity of the saline solution such as described above was 50500 µS/cm. As a result of this experiment, it has been confirmed that the damping of the radio wave greatly exceeds the permissible range of an ordinary radio system and a sufficient intensity of receiving cannot be obtained, thereby providing a condition unsuitable for carrying out the radio communication.

### Comparative Example 4

The inside of a pressure vessel 40 was filled with a saline solution having a salt concentration of 2.81 %, and radio communication was carried out in a frequency band of 13.56 MHz via a radio antenna 103A by setting the thickness of the saline solution (distance D1) that was present between the outer wall of the internal member 100 and the inner wall of the pressure vessel 40 to be 20 cm, and the intensity of receiving was measured.
The electric conductivity of the saline solution such as described above was 45600 µS/cm. As a result of this experiment, it has been confirmed that the damping of the radio wave greatly exceeds the permissible range of an ordinary radio system and a sufficient intensity of receiving cannot be obtained, thereby providing a condition unsuitable for carrying out the radio communication.

As will be understood from the above experiment results, when the outer wall of the internal member 100 is close to the inner wall of the pressure vessel 40, the thickness of the raw water (distance D1) that is present between the outer wall and the inner wall of the pressure vessel 40 is small, so that the damping of the radio wave due to the raw water can be restrained, whereby the radio communication can be carried out well.

In particular, when the thickness of the raw water (distance D1) that is present between the outer wall of the internal member 100 and the inner wall of the pressure vessel 40 is within 10 cm, the damping of the radio wave due to the raw water can be effectively restrained, whereby the radio communication can be carried out better.
This numerical value of "10 cm" can be deduced on the basis of the experiment results such as described above because the general electric conductivity of raw water is 500 to 130000 µS/cm and the general frequency band used in radio communication is 13.56 MHz to 2.4 GHz.

However, it is preferable that the part of the outer wall of the internal member 100 that is close to the inner wall of the pressure vessel 40 is spaced apart from the inner wall of the pressure vessel 40. In other words, the above distance D1 is preferably not "0". With such a construction, the outer wall of the internal member 100 and the inner wall of the pressure vessel 40 do not come into contact with each other.
Therefore, in inserting and fitting a member such as the internal member 100 into the pressure vessel 40, the internal member 100 can be prevented from being broken by frictions with the inner wall of the pressure vessel 40, and the labor at the time of inserting and fitting can be prevented from increasing.

Here, when the thickness of the raw water (distance D1) that is present between the outer wall of the internal member 100 and the inner wall of the pressure vessel 40 is small, the radio communication can be carried out well even when the distance D2 between the radio antenna 103A disposed in the internal member 100 and the inner wall of the pressure vessel 40 is of a certain degree.

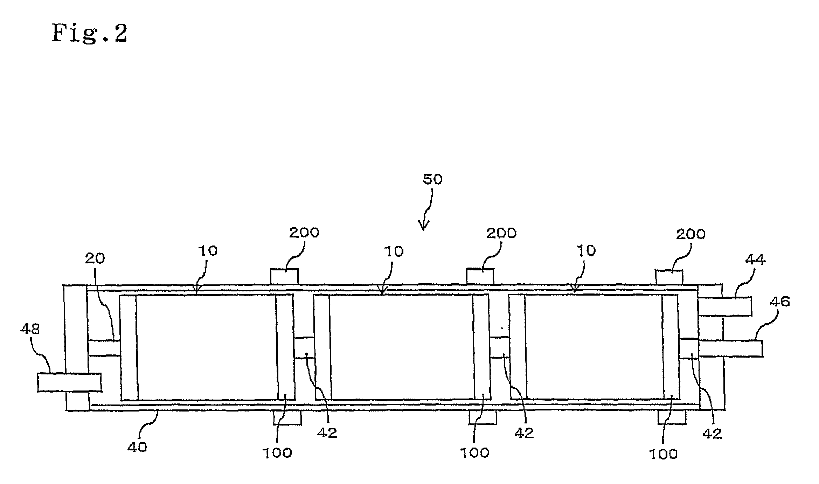

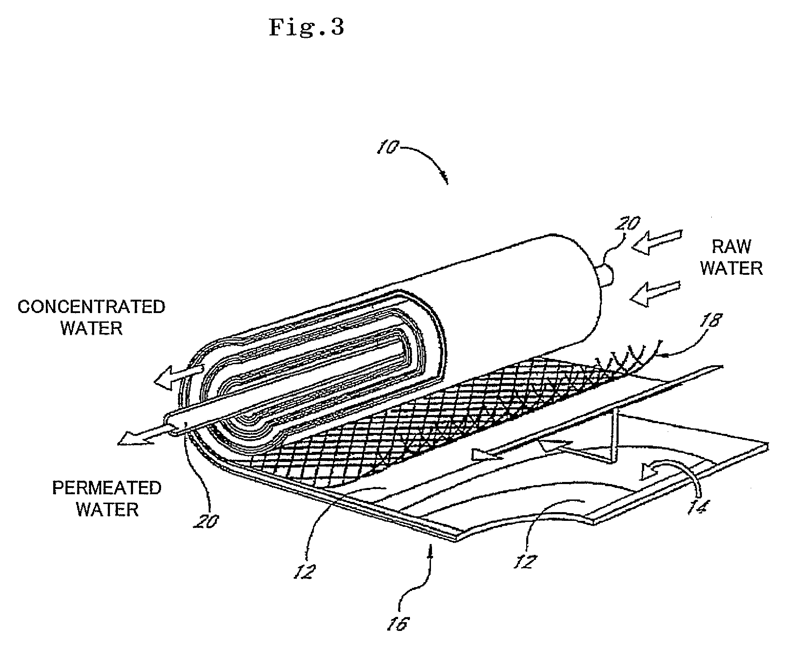

Fig. 2 is a schematic cross-sectional view showing a construction example of the membrane filtration device 50. Also, Fig. 3 is a perspective view showing a part of an internal construction of the membrane element 10 of Fig. 2. This membrane filtration device 50 is constructed by arranging and disposing a plurality of membrane elements 10 along a straight line within the pressure vessel 40.

The pressure vessel 40 is a tubular body made of resin and referred to as a vessel, and is formed, for example, of FRP (Fiberglass Reinforced Plastics). In this example, the pressure vessel 40 is formed to have a cylindrical shape.

At one end of the pressure vessel 40, a raw water flow inlet 48 through which raw water (raw liquid) such as waste water or sea water flows in is formed. By filtration of the raw water that flows in through the raw water flow inlet 48 with a plurality of membrane elements 10, purified permeated water (permeated liquid) and concentrated water (concentrated liquid) which is the raw water after filtration are obtained.
At the other end of the pressure vessel 40, a permeated water flow outlet 46 through which the permeated water flows out and a concentrated water flow outlet 44 through which the concentrated water flows out are formed.

Referring to Fig. 3, the membrane element 10 is an RO (Reverse Osmosis) element that is formed by winding a filtration membrane 12, a supply-side flow path material 18, and a permeation-side flow path material 14, in a laminated state, around a central pipe 20 in a spiral form.

On both surfaces of the permeation-side flow path material 14 formed of a net-shaped member made of resin and having a rectangular shape, a filtration membrane 12 having the same rectangular shape is superposed, and the three sides thereof are bonded, whereby a bag-shaped membrane member 16 having an opening at one side is formed.
Then, the opening of this membrane member 16 is attached to an outer circumferential surface of a central pipe 20 and is wound around the central pipe 20 together with the supply-side flow path material 18 formed of a net-shaped member made of resin, whereby the above membrane element 10 is formed. The filtration membrane 12 is formed, for example, by successive lamination of a porous support and a skin layer (dense layer) on a non-woven cloth layer.

When raw water is supplied through one end of the membrane element 10 formed as described above, the raw water passes within the membrane element 10 via a raw water flow path formed of the supply-side flow path material 18 functioning as a raw water spacer.
During that time, the raw water is filtered by the filtration membrane 12, and the permeated water that has been filtered from the raw water penetrates into a permeated water flow path formed of the permeation-side flow path material 14 functioning as a permeated water spacer.

Thereafter, the permeated water that has penetrated into the permeated water flow path passes through the permeated water flow path to flow to the central pipe 20 side, and is guided into the central pipe 20 through a plurality of water-passing holes (not illustrated) formed on the outer circumferential surface of the central pipe 20.
This allows that the permeated water flows out via the central pipe 20 from the other end of the membrane element 10, and the concentrated water flows out via the raw water flow path formed of the supply-side flow path material 18.

Referring to Fig. 2, a plurality of membrane elements 10 that are housed within the pressure vessel 40 are formed in such a manner that the central pipes 20 of adjacent membrane elements 10 are connected with each other by a tubular interconnector (connection section) 42.
Therefore, the raw water that has flowed in through the raw water flow inlet 48 flows into the raw water flow path successively from the membrane element 10 on the raw water flow inlet 48 side, and the permeated water that has been filtered from the raw water by each membrane element 10 flows out through the permeated water flow outlet 46 via one central pipe 20 connected by the interconnectors 42.
On the other hand, the concentrated water that has been concentrated by filtration of the permeated water by passing through the raw water flow path of each membrane element 10 flows out through the concentrated water flow outlet 44.

In this example of Fig. 2, the internal member 100 is provided at both ends of the membrane element 10. These internal members 100 are mounted at both ends in the axial line direction of the wound membrane member 16 so as to face each other. This allows that each internal member 100 functions as a telescope-preventing member for preventing the wound membrane member 16 from becoming telescopic due to the wound membrane member 16 being shifted in the axial line direction.
The internal member 100 has an outer circumferential surface corresponding to the outer circumferential surface of the membrane element 10, and the outer circumferential surface of the internal member 100 faces to be close to the inner circumferential surface of the pressure vessel 40. In this example, the internal member 100 is disposed at both ends of each membrane element 10 so as to be attachable and detachable.

An external unit 200 is provided at a position corresponding to the internal member 100 on the outside of the pressure vessel 40. This external unit 200 is for performing wireless data communication with an internal communication device 103 provided in the internal member 100. In this example, the external unit 200 is formed integrally with the pressure vessel 40.

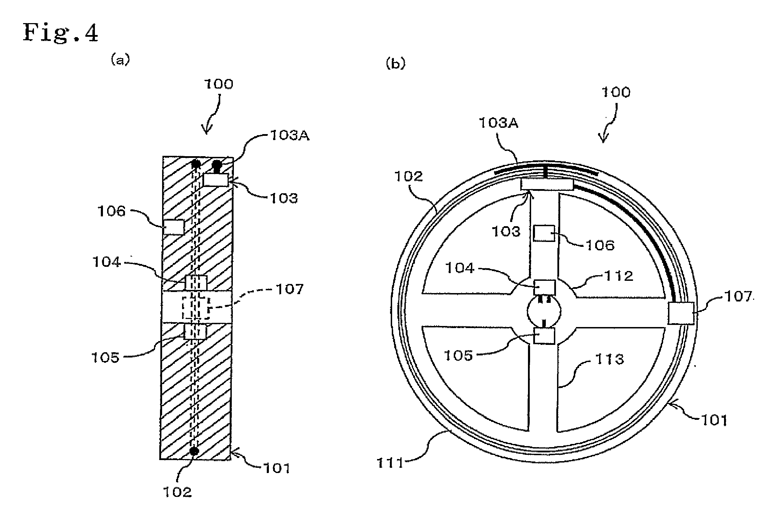

Fig. 4 is a view showing one construction example of the internal member 100, where Fig. 4(a) shows a cross-sectional view, and Fig. 4(b) shows a front view. However, in Fig. 4(b), the internal construction of the internal member 100 is shown in a solid line instead of a broken line.

The internal member 100 is provided with a main body 101 as well as a first conduction wire 102, an internal communication device 103, a plurality of sensors 104, 105, 106, and an IC chip 107 that are respectively held and supported by the main body 101.
The main body 101 has an integrally formed construction in which a first annular section 111 and a second annular section 112 having a smaller diameter than the first annular section 111 are connected via a rib 113. In this example, the main body 101 is made of resin; however, the main body 101 may be formed of a different material.

The first annular section 111 has an outer diameter that is almost equal to the outer diameter of the membrane element 10 and is disposed so that the outer circumferential surface thereof may face to be close to the inner circumferential surface of the pressure vessel 40. The second annular section 112 has an inner circumferential surface constituting a flow path of the permeated water.
The rib 113 is a member that connects between the inner circumferential surface of the first annular section 111 and the outer circumferential surface of the second annular section 112, and it is preferable that a plurality of ribs 113 are provided. However, the main body 101 is not limited to a shape such as described above and may have a different shape such as a circular disk shape, for example.

The first conduction wire 102 is a coil-shaped conduction wire formed by winding a conduction wire and is mounted on the first annular section 111 of the main body 101. The first conduction wire 102 is disposed in a shape (state) that goes along the outer circumferential surface of the first annular section 111 in the inside of the first annular section 111.
This allows that the first conduction wire 102 is disposed to face to be close to the inner circumferential surface of the pressure vessel 40. The first conduction wire 102 may be disposed either on the outside or in the inside of the internal member 100 as long as the first conduction wire 102 has a shape that goes along the outer circumferential surface of the internal member 100.
The distance between the first conduction wire 102 and the inner circumferential surface of the pressure vessel 40 is preferably as short as possible in view of transmitting and receiving a radio wave to and from the outside of the pressure vessel 40. Specifically, the above distance is preferably within 15 cm, more preferably within 5 cm, and still more preferably within 3 cm.

The internal communication device 103 is mounted on the first annular section 111 of the main body 101. As described above, this internal communication device 103 is provided with a radio antenna 103A and is adapted to be able to transmit and receive data via the radio antenna 103A.
The internal communication device 103 may have a construction including an RFID (Radio Frequency Identification). The internal communication device 103 can transmit output signals from the later-mentioned sensors 104, 105, 106 wirelessly from the radio antenna 103A.

The radio antenna 103A is disposed to face to be close to the inner circumferential surface of the pressure vessel 40. The distance between the radio antenna 103A of the internal communication device 103 and the inner circumferential surface of the pressure vessel 40 is preferably as short as possible in view of transmitting and receiving a radio wave to and from the outside of the pressure vessel 40.
Specifically, the above distance is preferably within 15 cm, more preferably within 5 cm, and still more preferably within 3 cm.

In the present embodiment, because the internal member 100 is provided at an end of the membrane element 10 having the filtration membrane 12, the internal member 100 is disposed at a position different from that between the filtration membrane 12 within the pressure vessel 40 and the inner wall of the pressure vessel 40.
Owing to such a construction, restrictions on the position at which the radio antenna 103A is disposed can be alleviated, and the radio antenna 103A can be disposed in a more suitable manner as compared with a case in which the radio antenna 103A is provided between the filtration membrane 12 within the pressure vessel 40 and the inner wall of the pressure vessel 40.

Also, by providing the radio antenna 103A in the internal member 100 disposed at an end of the membrane element 10, the radio antenna 103A can be disposed more easily as compared with a construction in which the radio antenna 103A is disposed on the filtration membrane 12 side.

The electric conductivity sensor 104 and the flow rate sensor 105 are a sensor that is mounted on the second annular section 112 of the main body 101 and senses the property of the permeated water that flows through the inside of the second annular section 112.
Specifically, the electric conductivity sensor 104 is a sensor that senses the electric conductivity of the permeated water, and the flow rate sensor 105 is a sensor that senses the flow rate of the permeated water.
The pressure sensor 106 is a sensor that is mounted on the rib 113 of the main body 101 and senses the property of the raw water. Specifically, the pressure sensor 106 is a sensor that senses the pressure of the raw water and can be constructed, for example, with a piezoelectric element, a strain gauge, or the like.

In the present embodiment, a construction is shown in which the electric conductivity sensor 104, the flow rate sensor 105, and the pressure sensor 106 are disposed in the internal member 100; however, the present invention is not limited to such a construction, so that various sensors known in the art such as physical sensors, chemical sensors, and smart sensors (sensors equipped with an information processing function) can be disposed in the internal member 100 in accordance with the characteristics of the liquid that flows within the pressure vessel 40 as long as they are the sensors that sense the property of the liquid.
However, it is preferable that at least one of the electric conductivity sensor 104, the flow rate sensor 105, and the pressure sensor 106 is disposed in the internal member 100. Here, the property of the liquid that is sensed by the sensors disposed in the internal member 100 may be, for example, a flow rate, a pressure, an electric conductivity, a temperature, or a state of contamination (ion concentration or the like).

In this manner, the properties of the liquid within the pressure vessel 40 can be observed from the outside by transmitting the signals from the sensors 104, 105, 106 that sense the properties of the liquid within the pressure vessel 40 via the radio antenna 103A and receiving the signals at the outside of the pressure vessel 40, so that maintenance can be carried out well on the basis of the observation result.

Also, with a construction in which the sensors 104, 105, 106 are provided in the internal member 100 as in the present embodiment, the radio antenna 103A and the sensors 104, 105, 106 are provided integrally within the internal member 100, so that the electrical connection between the radio antenna 103A and the sensors 104, 105, 106 can be certainly established by means of a shorter interconnect.
Also, since the radio antenna 103A and the sensors 104, 105, 106 can be integrally handled with, the work of assembling the membrane filtration device 50 and the like can be facilitated.

The IC chip 107 is a microcomputer that performs power control, sensor control, communication control, and the like to each of the electrical components disposed in the internal member 100. This IC chip 107 may have a construction of being made of a plurality of chips or may have a construction of being integrated into one chip.

The peripheries of the electrical components held and supported by the main body 101 of the internal member 100 such as described above, that is, the first conduction wire 102, the internal communication device 103, the plurality of sensors 104, 105, 106, and the IC chip 107, are covered with resin by being respectively buried in the inside of the main body 101.
Also, the peripheries of the interconnectors that electrically connect the components such as described above with each other are covered with resin by being buried in the inside of the main body 101.
This allows that corrosion or damage of each component due to sea water, waste water, acid or alkali used in washing, and the like can be restrained. However, since the sensing part of the sensors must be exposed to the outside of the main body 101, it is preferable to adopt a construction in which the parts other than the aforementioned sensing part are buried in the inside of the main body 101.

In the present embodiment, the first conduction wire 102, the internal communication device 103, the sensors 104, 105, 106, and the IC chip 107 are provided in the attachable and detachable internal member 100.
Therefore, even in a case of exchanging membrane elements 10, the internal member 100 that was used in an old membrane element 10 may be used in a new membrane element 10, whereby these electrical components can be used again.

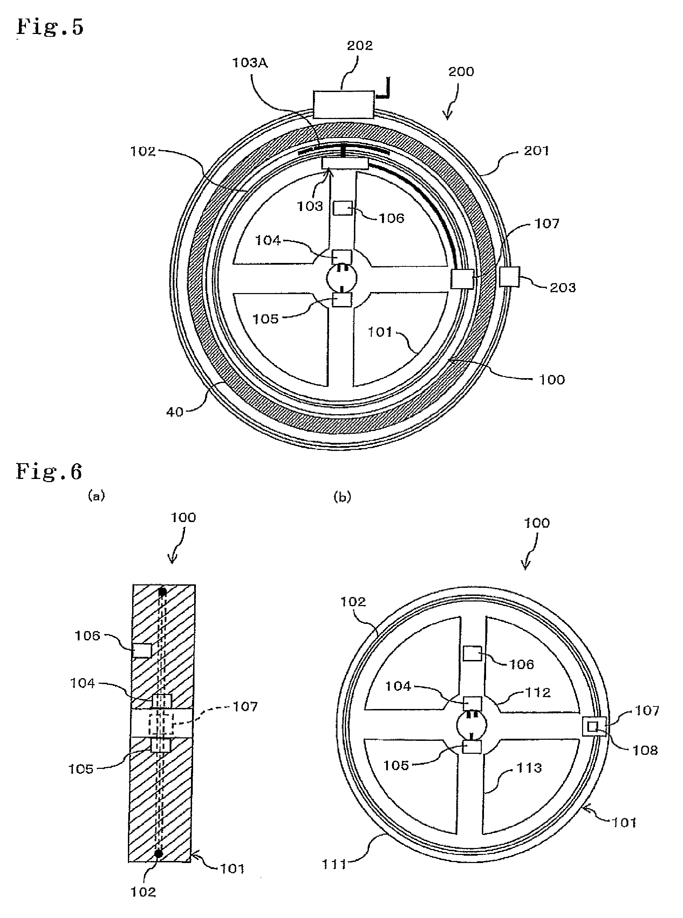

Fig. 5 is a schematic cross-sectional view showing one example of a membrane filtration device 50 using the internal member 100 of Fig. 4. In Fig. 5, the internal construction of the internal member 100 is shown in a solid line instead of a broken line as in Fig. 4(b).
As shown in this Fig. 5, the external unit 200 disposed on the outside of the pressure vessel 40 is provided with a second conduction wire 201, an external communication device 202, and an IC chip 203.

The second conduction wire 201 is a coil-shaped conduction wire formed by winding a conduction wire and is disposed in a shape (state) that goes along the outer circumferential surface of the pressure vessel 40 at a position that faces the first conduction wire 102. The second conduction wire 201 may be either in contact with or spaced apart from the outer circumferential surface of the pressure vessel 40.
However, when a construction of being spaced apart is adopted, the second conduction wire 201 preferably faces to be close to the outer circumferential surface of the pressure vessel 40. Also, the second conduction wire 201 may be buried in the material (for example, resin material) constituting the pressure vessel 40.

The distance between the second conduction wire 201 and the outer circumferential surface of the pressure vessel 40 is preferably as short as possible in view of transmitting and receiving a radio wave to and from the inside of the pressure vessel 40. Specifically, the above distance is preferably within 15 cm, more preferably within 5 cm, and still more preferably within 3 cm.

The external communication device 202 is disposed at a position on the outside of the pressure vessel 40 that faces the internal communication device 103. This external communication device 202 functions as a relay device that receives data from the internal communication device 103 and transmits the received data wirelessly to a management device or the like.
The data communication between the internal communication device 103 and the external communication device 202 is carried out by transmitting and receiving a radio wave, for example, in a frequency band of 2.4 GHz.

The IC chip 203 constitutes a power feeding device that supplies electric power wirelessly from the second conduction wire 201 to the first conduction wire 102. The IC chip 203 is provided with an oscillation circuit and an amplification circuit, and feeds electric power by transmitting a radio wave from the second conduction wire 201 to the first conduction wire 102, for example, in a frequency band of 13.56 MHz. Here, the IC chip 203 may have a construction of being formed integrally with the external communication device 202.

In this example, a construction has been described in which power feeding is carried out via the first conduction wire 102 and the second conduction wire 201; however, a construction may be adopted in which power generation is carried out in the inside of the pressure vessel 40 by omitting these first conduction wire 102 and second conduction wire 201.
For example, a construction may be adopted in which a rotor such as a blade wheel is provided within the pressure vessel 40, and power generation can be carried out by rotating the rotor with the flow pressure of the liquid (raw water, permeated water, or the like) flowing within the pressure vessel 40.

Fig. 6 is a view showing another construction example of the internal member 100, where Fig. 6(a) shows a cross-sectional view, and Fig. 6(b) shows a front view. However, in Fig. 6(b), the internal construction of the internal member 100 is shown in a solid line instead of a broken line. Hereinafter, only the construction different from that in the construction example of Figs. 4 and 5 will be described.

The internal member 100 is provided with a main body 101 as well as a first conduction wire 102, a plurality of sensors 104, 105, 106, and an IC chip 107 that are respectively held and supported by the main body 101. However, unlike the construction example of Figs. 4 and 5, the internal member 100 is not provided with an internal communication device 103.

The IC chip 107 is provided with a modulation/demodulation circuit 108. The modulation/demodulation circuit 108 is a modulation/demodulation device for modulating a radio signal transmitted via the first conduction wire 102 and demodulating a radio signal received via the first conduction wire 102.
However, the modulation/demodulation circuit 108 is not limited to a construction of being formed integrally with the IC chip 107 but may have a construction of being disposed separately from the IC chip 107.

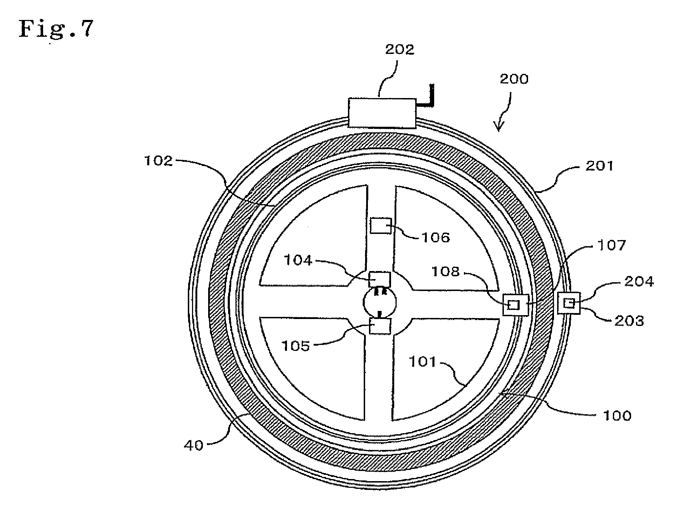

Fig. 7 is a schematic cross-sectional view showing one example of a membrane filtration device 50 using the internal member 100 of Fig. 6. In Fig. 7, the internal construction of the internal member 100 is shown in a solid line instead of a broken line as in Fig. 6(b). As shown in this Fig. 7, the external unit 200 disposed on the outside of the pressure vessel 40 is provided with a second conduction wire 201, an external communication device 202, and an IC chip 203.

The IC chip 203 is provided with a modulation/demodulation circuit 204. The modulation/demodulation circuit 204 is a modulation/demodulation device for modulating a radio signal transmitted via the second conduction wire 201 and demodulating a radio signal received via the second conduction wire 201.
However, the modulation/demodulation circuit 204 is not limited to a construction of being formed integrally with the IC chip 203 but may have a construction of being disposed separately from the IC chip 203.

In this example, output signals from the sensors 104, 105, 106 are modulated by the modulation/demodulation circuit 108 to be wirelessly transmitted from the first conduction wire 102, and the radio signals received via the second conduction wire 201 are demodulated by the modulation/demodulation circuit 204.
The signals demodulated by the modulation/demodulation circuit 204 are received by the external communication device 202 functioning as a relay device and are wirelessly transmitted to a management device or the like.

In this manner, in the case of performing radio communication by transmitting and receiving data via the first conduction wire 102 and the second conduction wire 201, the first conduction wire 102 functions as the radio antenna in the present invention.

In this example, a construction has been described in which power feeding is carried out via the first conduction wire 102 and the second conduction wire 201; however, a construction may be adopted in which power generation is carried out in the inside of the pressure vessel 40.
For example, a construction may be adopted in which a rotor such as a blade wheel is provided within the pressure vessel 40, and power generation can be carried out by rotating the rotor with the flow pressure of the liquid (raw water, permeated water, or the like) flowing within the pressure vessel 40.

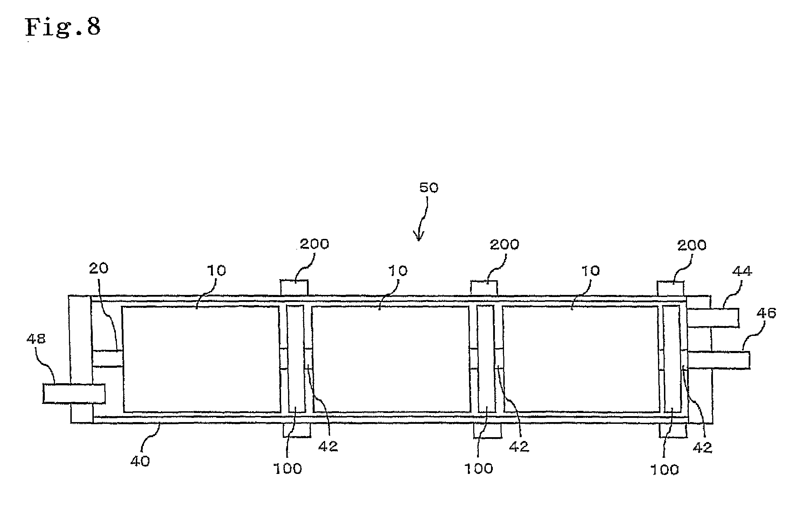

Fig. 8 is a schematic cross-sectional view showing another example of the membrane filtration device 50. This membrane filtration device 50 is constructed by arranging and disposing a plurality of membrane elements 10 along a straight line within the pressure vessel 40 in the same manner as the membrane filtration device 50 shown in Fig. 2. The specific construction of the membrane element 10 is similar to the construction described with reference to Fig. 3.

In this example of Fig. 8, the internal member 100 is provided as a body separate from the membrane element 10. The internal member 100 has an outer circumferential surface corresponding to the outer circumferential surface of the membrane element 10, and the outer circumferential surface of the internal member 100 faces to be close to the inner circumferential surface of the pressure vessel 40.
In this example, the internal member 100 is mounted on the interconnector 42, and the radio antenna 103A and the like described above are disposed in the internal member 100.
The interconnector 42 is attachable to and detachable from the central pipe 20 of each membrane element 10, whereby the internal member 100 is made attachable and detachable. As a specific construction of the internal member 100, a construction such as described above with reference to Fig. 4 or Fig. 6 can be adopted.

In the membrane filtration device 50 having such a construction, by providing the radio antenna 103A in the internal member 100 disposed as a body separate from the membrane element 10, the radio antenna 103A can be disposed more easily as compared with a construction in which the radio antenna 103A is disposed in the membrane element 10.

### DESCRIPTION OF REFERENCE SIGNS

- 10: membrane element
- 12: filtration membrane
- 14: permeation-side flow path material
- 16: membrane member
- 18: supply-side flow path material
- 20: central pipe
- 40: pressure vessel
- 42: interconnectors
- 44: concentrated water flow outlet
- 46: permeated water flow outlet
- 48: raw water flow inlet
- 50: membrane filtration device
- 100: internal member
- 101: main body
- 102: first conduction wire
- 103: internal communication device
- 103A: radio antenna
- 104: electric conductivity sensor
- 105: flow rate sensor
- 106: pressure sensor
- 107: IC chip
- 108: modulation/demodulation circuit
- 111: first annular section
- 112: second annular section
- 113: rib
- 200: external unit
- 201: second conduction wire
- 202: external communication device
- 203: IC chip
- 204: modulation/demodulation circuit
- D 1: distance
- D2: distance

## Claims

1. A membrane filtration device that produces permeated liquid by filtering raw liquid with a filtration membrane, **characterized by** comprising:
- a pressure vessel that houses the filtration membrane and whose inside is filled with the raw liquid;
- an internal member disposed at a position different from that between the filtration membrane within the pressure vessel and an inner wall of the pressure vessel, at least a part of an outer wall of which is close to the inner wall of the pressure vessel; and
- a radio antenna disposed in the internal member.

2. The membrane filtration device according to claim 1,
**characterized in that** a distance between the inner wall of the pressure vessel and the part of the outer wall of the internal member close to the inner wall of the pressure vessel is within 10 cm.

3. The membrane filtration device according to claim 1,
**characterized in that** the part of the outer wall of the internal member that is close to the inner wall of the pressure vessel is spaced apart from the inner wall of the pressure vessel.

4. The membrane filtration device according to claim 1,
**characterized in that** the radio antenna is enclosed and buried within the internal member.

5. The membrane filtration device according to claim 1,
**characterized by** comprising a sensor that senses a property of liquid within the pressure vessel, wherein a signal from the sensor is transmitted via the radio antenna.

6. The membrane filtration device according to claim 5,
**characterized in that** the sensor is disposed in the internal member.

7. The membrane filtration device according to claim 1,
**characterized in that** the internal member is disposed at an end of a membrane element having the filtration membrane.

8. The membrane filtration device according to claim 1,
**characterized in that** the internal member is disposed as a body separate from a membrane element having the filtration membrane.
